# EUROPEAN PATENT APPLICATION

(11) **EP 4 249 116 A1**
(43) Date of publication of application: **27.09.2023**
(21) Application number: 23163342.1
(22) Date of filing: 22.03.2023
(51) Int. Cl.: B01L 3/00, B29C 65/02

(54) **CONTAINER FOR DIAGNOSTIC ASSAYS**

(30) Priority: 25.03.2022 LU 102922
(71) Applicant: Stratec SE, 75217 Birkenfeld (DE)
(72) Inventor: Meyer, Andreas, 75217 Birkenfeld (DE); Kirzinger, Hannes, 75217 Birkenfeld (DE)
(74) Representative: Tegethoff, Sebastian

(57) **Abstract**

The invention relates to a container or consumable like a reaction tube for use in diagnostic assays. The present invention provides a system for fluid handling and transport, comprising a plate with at least one cavity for receiving a fluid which is surrounded by a rim, and a separate cover comprising a centrally arranged surface as a sealing element which is surrounded by a rim, wherein the plate or the cover comprise at least one snap-fit mechanism for connecting at least two plates, at least two covers or a plate and a cover, wherein the snap-fit mechanism extends upwards or downwards from the surrounding rim of the plate or the cover, and wherein the rim of the plate or cover which is to be connected is configured for accommodating the snap-fit mechanism of an upper or lower plate or cover in a retaining element arranged at the rim.

## Description

### Field of the Invention

The invention relates to a container or consumable like a reaction tube for use in diagnostic assays.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

STRATEC designs and manufactures automated analyzer systems like diagnostic systems for biochemically processing samples, in particular patient samples. A wide range of reaction tubes which are so called consumables are used in PCR (polymerase chain reaction) applications for molecular diagnostics. Conical wells represent most of such consumables and can be differentiated according to the number of cavities and their applicability for automation.

So called PCR multi-well plates or PCR microplates with 96 or 384 reaction cavities are designed for high throughput applications and batch processing. These consumables provide a limited processing flexibility because only a few assays and parameters can be tested during a lab shift. This is caused by the common duration of thermal cycling processes (which is mainly influenced by hardware and assay properties) and the fact that only one thermal profile can be applied per plate at a time. In case of a low sample and/or test number, the percentage of unused wells is quite high which leads to a considerable increase of costs and unprocessed plastic waste.

Consumables with a lower cavity number address the previously mentioned disadvantages and ensure a flexible processing and demand-based consumption. These group of consumables includes, for example, single PCR tubes, eightfold tube strips or 24 well plates. According to the boundary conditions of low throughput and high flexibility, most of these disposables are not designed for automated processing and machine handling. This requires a high amount of manual work steps which need to be performed by qualified lab staff.

Another important aspect is the necessity to store, handle, and load consumables during the daily work in a laboratory. Usually storage space is limited, and the time-consuming handling of consumables prevents qualified technicians from doing more valuable tasks and activities. Therefore, a consumable batch with a small and compact form is required. The size of batches and single consumables is also important to reduce the occupied space in the instrument.

Market and customers request an approach which combines the above outlined advantages. This includes a flexible and low-cost consumable system suitable for automated high throughput applications in combination with advanced usability.

The most common state of art consumables for PCR analysis are microplates with 96 or 384 conical wells. Such plates have identical outer dimensions (SBS format) and provide different well sizes for different filling volumes. It is possible to process a high number of tests in parallel using a large quantity of cavities.

Microplates fulfilling said requirements are manufactured via (two-component) injection molding. The material used is almost exclusively polypropylene (PP). For two-part plates, a frame is made of polycarbonate (PC) and the wells are made of PP. The conical wells are made of a transparent, black, or white material. PCR / qPCR plastics are most made of polypropylene because it is inert regarding chemicals and able to withstand rapid changes in temperatures during thermal cycling. The inert property of polypropylene minimizes absorption of the reaction components, and thus allows to ensure optimal PCR results. To further warrant lot-to-lot consistency in purity and biocompatibility, high-quality virgin polypropylene, like that used for medical-grade or molecular biology-grade plasticware, should be used in manufacturing. Furthermore, PP provides additional advantages like high hydrophobicity, low water adsorption etc.

Microplates will be delivered wrapped in foil bags and are available individually or in stacks. Most workflows require the manual separation and handling of single microplates after unpacking them for plate sealing during PCR setup. Only specific high throughput analysers perform all steps automatically.

Liquid handling and optical fluorescence measurement are performed usually from the top through cavity openings. All analysers provide thermal interfaces for direct contact between the conical outer well surfaces and the thermal cycler surfaces to ensure a fast energy transfer from the heating and cooling element to the reaction sample and vice versa. The wells are commonly sealed with transparent foils, mats or sealing strips after filling them for avoiding contamination and evaporation of liquids during handling and PCR including thermal heating and cooling.

Other also common state of the art consumables provide up to eight cavities for liquids. Most of them are designed for low throughput applications and the manual handling by lab technicians is required for instance for loading of prepared PCR consumable into thermal cycler. The used material is also almost exclusively made of PP. Such consumables will be provided as bulk material in foil bags or cardboard boxes which requires manual handling steps for preparing them for use. Sealing of wells or cavities is usually done via integrated or separate caps. Preparation, thermal cycling, and measurements of optical signals is mostly identical to the above-described microplate systems. In certain systems the light emission is measured through the cavity bottom.

In addition, there are plates known in the prior art having fewer cavities and those that can be separated or divided on demand. Other solutions provide random access capabilities and allow the needs-based equipping of suitable carrier plates with strips or single cavities.

Published U.S. Patent Application No. US 2017/0268039 A1 discloses systems that include reaction vessels and reaction vessel caps. In certain aspects, the reaction vessels include a reaction chamber and a groove disposed around a top opening of a reaction chamber. The system also includes a RV cap that includes a cap body, a RV plug, and a lower wall that includes an outer radial groove disposed above an outward projecting ridge of the lower wall. When the cap is inserted into the RV, the RV plug of the RV cap is sealingly inserted into the reaction chamber of the RV, a ridge of the RV mates with the outer radial groove of the RV cap, and an outward projecting ridge of the RV cap mates with the radial groove of the RV. Also provided are methods and sample analysis systems, which may employ the RV/RV cap systems of the present disclosure.

Published European patent application No. EP 2 799 886 A1 relates to a device for storing and dispensing cuvettes from a stack. The device has at least one cuvette stack receiving compartment, which may be a tube open at both ends, wherein one of the openings is provided with retaining springs, partly blocking the opening, so that the cuvette stack having been dropped into the compartment may come to rest on the retaining springs. The retaining springs are being spaced apart from the opening of the compartment by a distance that allows at least two cuvettes in the stack to stick out of the compartment opening. Furthermore, a cuvette separator with retaining spring spreaders is provided, moveable between a standby position away from the compartment and a cuvette separation position across the retaining spring opening of the compartment, and in between the two cuvettes, sticking out of the compartment.

Published U.S. patent application US 2019/154716 A1 relates to an analytical apparatus and a method for isolating and analyzing at least one analyte comprising at least one module for receiving and dispensing a sample to be analyzed, at least one module for isolating said analyte to be analyzed, at least one module for analyzing said analyte, wherein said modules (i) to (iii) are arranged along an axis. This document discloses a rack comprising an upper rack, a lower rack, and an insert rack. It is disadvantageous that the upper rack comprises through boreholes so that it is not suitable for sealing of a fluid.

Published European patent application EP 1 757 367 A1 discloses a method for the automated handling of a fluid biological sample in an analytical instrument. This method comprises providing on an analytical instrument a container having a cup portion held in a receptacle and having an opening as well as a cap portion comprising a cover closing said opening and being permanently attached to one side of said cup portion and a handling head. During automated operation, the handling head approaches said container to a side of said container having a closure by which said cover is vertically and reversibly fixed for closing said opening and horizontally asserts pressure on said closure to release said cover from said vertical and reversible fixation, and optionally raising said cover by raising said handling head to open said cup portion. Furthermore, the invention provides containers as well as instruments and systems suitable for the automated handling and processing of the fluid biological sample and discloses production methods for the manufacture of said vessels. It is disadvantageous that a container according to the present invention provides a cap portion which is permanently attached to one side of a cup portion so that it is not possible to stack and connect at least two cap portions, at least two cup portions or a cap and a cup portion, respectively.

Published U.S. patent application US 2015/132841 A1 relates to a vessel holder assembly for receiving one or more vessels, includes a first set of attachment features. A cap assembly, for covering the vessel(s) includes a second set of attachment features. Respective attachment features of the vessel holder and the cap assembly may be complementary, such that engagement between complementary attachment members results in an attachment between the cap assembly and the vessel holder. Such an attachment may be manually removable, or may be locked so as to require a tool, or other suitable method, for detaching the cap assembly from the vessel holder. The vessel holder according to this document requires separate vessels for receiving a fluid and it is further not possible to stack and thus connect a cap and a vessel.

Published U.S. patent US 6,426,215 B1 discloses a cover for a PCR plate having multiple wells including a rigid sheet, and a resiliently compliable sheet cooperating with one side of the substantially rigid sheet to a press a sealing sheet against the surface of the PCR plate to maintain a seal in the wells. The cover further includes at least one retaining device attached to the rigid sheet to engage with the PCR plate and retain the substantially rigid sheet and the resiliently compliable sheet in a condition to press the sealing sheet against the surface of the PCR plate. Also disclosed is an assembly that includes a PCR plate and a cover that is designed to prevent sample loss. This document relates to a separate rigid cover that can be attached to a PCR plate and does not relate to a system comprising a plate for the storage and processing of a fluid and a cover for sealing of the plate wherein at least two plates, st least two cover, or cover and plate are stackable while being connected.

Disadvantages of the available solutions relate to microplate consumables for batch analysis which provide a limited processing flexibility. Only a few assays and parameters can be tested during a lab shift because only one or slightly different thermal profiles can be applied per plate at a time like a single PCR runtime is also influenced by hardware and assay performance. In case of a low sample number the percentage of unused wells is quite high which leads to a high amount of costs and unprocessed plastic waste. Further, most of the consumables with low cavity numbers are not designed for automated machine handling and processing. This requires a high amount of manual processing steps especially during PCR setup. It is also to be noted, that poor usability can be caused by additional steps for separation, orientation, temporary storage, two-hand operation, leftover handling, (re-)packing etc. Further disadvantages relate to excluding highly complex instruments, cavity sealing requires manual user intervention in combination with separate process stations.

The PCR consumables based on microfluidic chip technologies are rather complex with respect to liquid handling, sealing of cavities comprising liquids and thermal treatment. Accordingly, development and production as well as the consumable itself are cost intensive.

Thus, there is a need for an alternative container for performing assays in automated analyser systems.

### Object of the Invention

It is therefore the object of this invention to provide a device for storing liquids used in automated analyser systems.

### Summary of the Invention

The present invention provides a system for fluid handling and transport, comprising a plate with at least one cavity for receiving a fluid which is surrounded by a rim, and a separate cover comprising a centrally arranged surface as a sealing element which is surrounded by a rim, wherein the plate or the cover comprise at least one snap-fit mechanism for connecting at least two plates, at least two covers or a plate and a cover, wherein the snap-fit mechanism extends upwards or downwards from the surrounding rim of the plate or the cover, and wherein the rim of the plate or cover which is to be connected is configured for accommodating the snap-fit mechanism of an upper or lower plate or cover in a retaining element arranged at the rim.

Another embodiment of the invention provides a system with wherein the centrally arranged surface is surrounded by a frame holding a sealing foil.

It is further intended that the sealing foil is configured to be permanently connected to the upper ends of the cavities' openings by heat sealing, or wherein the sealing foil that is configured to be permanently connected to the upper ends of the cavities' openings by an adhesive.

It is also envisaged that the centrally arranged surface is a rigid plate configured to be permanently pressed on the upper ends of the cavities' openings by the engagement of the at least one snap-fit mechanism in the retaining element.

The centrally arranged surface can be made of a translucent material and/or comprises a translucent window configured to allow light transmission.

In another embodiment the centrally arranged surface comprises at least one downwards projecting protrusion which accommodates form-fit into the opening of a cavity.

Another aspect of a system according to the instant disclosure relates to the walls of the cavities which can be made of
- a white material for increasing light reflection inside the cavity and preventing light refraction out of the cavity; or
- a black material for reducing background light reflection.

It is also intended that the upper ends of the cavities are surrounded by a collar extending over the surrounding surface of the plate.

In an embodiment of a system of the present invention, the collar can be made of a material configured to melt with the centrally arranged surface of the cover during heat sealing. Alternatively, the collar can be a sealing ring.

It is further possible that the plate comprises four cavities arranged two by two.

The plate and its surrounding rim may have a quadratic shape.

In another embodiment of a system according to the present disclosure, the at least one snap-fit mechanism can be a hook extending upwards or downwards from the rim of the cover or the plate.

The system may also comprise a plate and a cover with sealing element with at least two snap-fit mechanisms on two opposing sides.

Another object of the present disclosure relates to the use of a system as described above in PCR applications.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows stacks of consumables.
FIG. 2 shows a well plate in a perspective from above and below.
FIG. 3 shows a sectional view through a consumable with liquids in the cavities.
FIG. 4 shows a sectional view of cavities which are placed into an element for heating and cooling of the liquids.
FIG. 5 shows in its left part a sealing element, in the upper right part a sealing element connected to a plate with fluids and in its right lower part a heating element for sealing the sealing element permanently to the plate.
FIG. 6 shows in its left part a comparison between light refraction in a well, made of clear material (left) and white material (right) and it its right part a comparison between light detection in clear cavities (upper row) and white cavities (lower row).
FIG. 7 shows an embodiment of the cover with sealing element which has a central surface which comprises at least one plug.
FIG. 8 shows a stack of two plates with downwards projecting snap-fit mechanisms.

### Detailed Description of the Invention and the Figures

The technical problem is solved by the independent claims. The dependent claims cover further specific embodiments of the invention.

The present invention provides a system comprising a consumable in terms of a device intended for single use which represents an attractive trade-off for potential customers between throughput, processing flexibility and overall costs. The system according to the present disclosure reduces the waste volume and further the number of unused process cavities of a consumable in an automated analyser system.

The system of the present disclosure represents a very compact and stackable consumable which may be used for polymerase chain reaction (PCR) besides other applications with detachable retaining features. Only a small space is required during storage and transport of the product because the consumable and its cover can be stacked which reduces the required space.

The system provides a high loading and storage capacity to an automated analyser system like a diagnostic instrument for instance. The risk of consumable, instrument, or sample contamination during manual handling by the user is minimized and automated handling inside the analyser is optimised.

A heat sealing or plastic welding is intended for obtaining air-tight sealed reaction cavities. The consumable according to the present invention comprises a system with a plate with at least one cavity for receiving a fluid like a liquid and cover for sealing said at least one cavity is optimised with respect to its performance in terms of allowing fast cycling, fluorescence measurement, and avoiding condensation during PCR for instance. Handling of the consumables is also optimized regarding stackability, automated transfer capabilities etc.

The product design is optimized for machine handling, not only in the context of a laboratory environment but also with respect to manufacturing of the consumables comprising plate and cover for reducing costs.

The product and consumable design focusses on a quick, easy, and reliable handling as well as self-explanatory usability.

A consumable according to the present disclosure may be used in the field of molecular diagnostics, more specific in PCR applications, e.g., real-time PCR and quantitative PCR. The primary function of the system or the consumable, respectively, encompasses the holding and sealing of the added liquids like samples and reagents during nucleic acid (NA) amplification for instance. The consumable is intended exclusively for single use only. It is designed for the usage in automated analytical systems in a lab environment in a clinic or privately owned labs, in line with in-vitro diagnostic (IVD) analysis.

The usage of a consumable in a fully automated analyser system includes loading, storage, separation, transportation, pipetting, sealing, centrifugation, thermal cycling, fluorescence measurement and disposal. An explanatory workflow considering operator, instrument and consumable may contain the following steps:
a. System checks consumable resources on board;
b. System requests reloading;
c. Lab technician puts on gloves (if not yet done);
d. Open cardboard box and remove plastic bag with consumables batches;
e. Remove batches / stacks from plastic bag;
f. Scan or type in consumable ID for traceability;
g. Place stacks in the according (separated) loading interface of the analytical system;
h. System checks / monitors stack loading (message to operator in case of failure);
i. System allows / releases stack insertion;
j. Analyzer stores and distributes loaded stacks;
k. Demand-based separation, supply and transfer of plate;
l. Pipetting (and optional mixing) of sample and reagent to plate;
m. Demand-based separation, supply and transfer of sealing element;
n. Assembly of plate and sealing element (attach sealing on top of plate);
o. Heat sealing of filled plate;
p. Transfer of sealed consumable to centrifuge;
q. Centrifugation of reaction sample within consumable;
r. Transfer of consumable to thermal cycler (including cycler closing);
s. Thermal cycling of reaction sample according to selected thermal profile / assay;
t. Fluorescence measurement of reaction sample during or after thermal cycling;
u. Open cycler and discard / transfer processed consumable into solid waste;
v. Operator removes solid waste from system (if requested by the system).

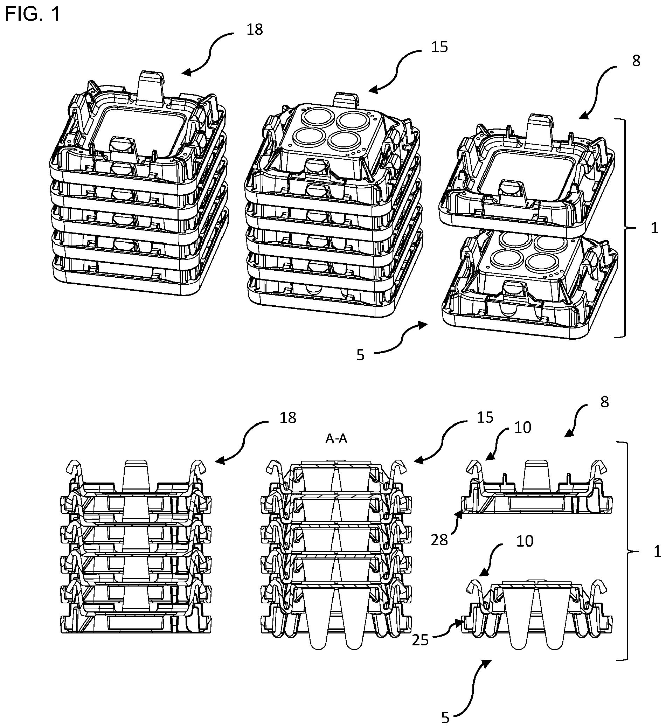

A consumable 1 according to the present disclosure comprises a plate 5 and a cover with a sealing element 8. Important aspects for the design and shape of a consumable relate to its optimization it for machine automation and stacking. FIG. 1 shows stacks of plates 15 and stacks of cover with sealing elements 18. Therefore, each plate 5 and each cover with sealing element 8 provide a specific rim 25, 28 configured for accommodating a snap-fit mechanism 10. The detachable snap-fit mechanism 10 keeps stackable parts together but allows the needs-based separation of stack portions or single elements.

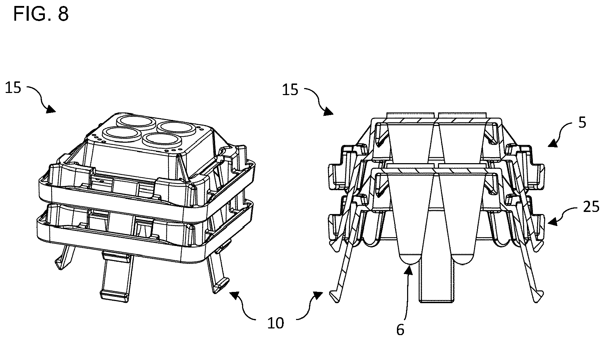

The snap-fit mechanism 10 comprises in an embodiment a hook which extends from the upper surface of rims 25, 28 and the lower surface of rims 25, 28 is configured to accommodate the hook so that the rim may comprise a retaining element, which can be an edge that is formed at the bottom side of the respective rim into which the hook of a lower plate snaps in (comp. FIG. 1). The hook may also extend downwards so that it accommodates from an upper plate or cover into the rim of a lower partner (FIG. 8).

It is to be noted that a single snap-fit mechanism within the meaning of the present disclosure is sufficient for connecting two plates, two cover or a plate to a cover. An embodiment with a hook extending upwards or downwards from a rim of a plate will accommodate in the retaining element of the cover's or plate's rim which surrounds the cover so that the force which connects the parts will be applied to the complete surrounding rim. Providing more than one snap-fit mechanism may be used to achieve a more equal distribution of the connecting forces resulting from the connection between snap-fit mechanism, e.g. a hook, and the retaining element of an above arranged rim.

Plates 5 and cover with sealing elements 8 are stacked separately depending on their type (FIG. 1). Consumable stacks ensure a dense packaging as well as a compact storage inside and outside of an analyzer. Each component of a system according to the instant disclosure may in an embodiment also provide a four-fold symmetric design which allows the handling of the consumable 1 independent from its orientation with respect to a symmetry plane. This reduces the overall manipulation effort, because no alignment or orientation steps are necessary, facilitates loading, positioning, separation, transport as well as other processes during handling of the consumable 1 and increases the reliability of the complete system.

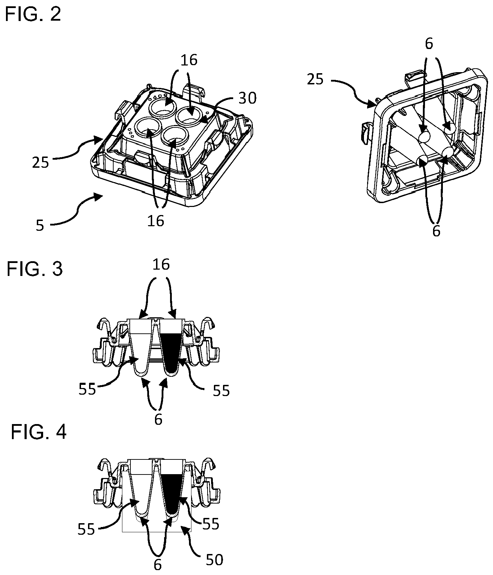

FIG. 2 shows a plate 5 in a perspective from above (left part) and below (right part). The plate provides four separate cavities 6 which are surrounded by a structure which can be regarded to be a supporting rim 25.

The cavities 6 of a consumable or plate 5 are intended to receive a liquid 55 which may comprise extracted nucleic acids, enzymes, primers, beads etc. during PCR setup and PCR for instance (comp. FIG. 3). All liquids 55 will be pipetted from above through a cavity's opening 16.

To ensure a fast energy transfer between the surfaces of the cycler's heating and cooling device and the liquids 55 which are located inside a cavity 6, the free-standing conical cavities may have thin walls and will be in direct contact to the surfaces of the thermal treatment unit 50 which is responsible for heating and cooling (comp. FIG. 4). The conical cavities 6 ensure a proper seating in the thermal interface and facilitate consumable handling and insertion.

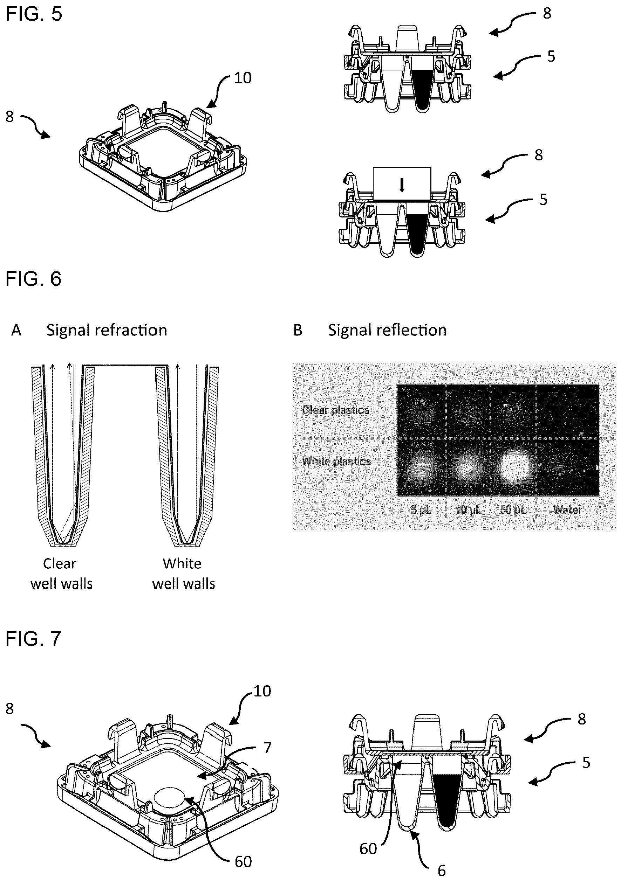

All plate cavities 6 can be closed by the cover with sealing element 8 (FIG. 5 left) which ensures contamination-free handling of the liquids and avoids evaporation of the pipetted liquids along thermal cycling for example. A two-stage sealing process may comprises the capping (FIG. 5 right top) and plastic welding indicated by the arrow in the block (comp. FIG. 5 right bottom). Following filling of a liquid in the cavities of a consumable and optionally mixing of the liquids using a pipettor, the cover with sealing element 8 will be attached to the plate automatically (FIG. 5 right top) and held in place by the snap-fit mechanism 10 for stacking.

In the next step, both components will be joined permanently. One way for achieving the permeant sealing is heat sealing resulting in an air-tight connection between the sealing element of the cover and the upper opening of the cavities 6, respectively (comp. FIG. 5 right bottom). The sealing element is formed by a central surface, wherein this term is used synonymously with centrally arranged surface, because the central surface is surrounded by a rim and thus arranged centrally with respect to the rim, as can be taken from the figures. The plate may provide a collar 30 (comp. FIG. 2 left) like welding edges or rips surrounding each well's opening, wherein the collar will melt down for creating a material bonding between plate and sealing element. A heater applies from above the required energy for melting through the (thin) sealing element, like a foil, and applies additional pressure to join sealing element 8 and collar 30 surrounding the cavities' openings 16.

An alternative solution is to use a two-component cover with sealing element 8, comprising a frame for holding a sealing foil. The sealing foil can be either an adhesive or a heat-sealing foil. The sealing foil can be fixed above or underneath of the frame.

The sealing element can be made of a clear a highly light transmissive (translucent) material and it may comprise a measurement window for fluorescence excitation and detection. The sealing element is designed to support the light transmission through the areas (cover) above the well's opening. The (well) plates are made of white or opaque material, respectively, in order to enhance light emission towards the cover. The use of white plastics improves the sensitivity and consistency of qPCR data by preventing fluorescence refraction out of the well. With refraction being minimized, more signals will be reflected to the detector, increasing the signal-to-noise ratio. In addition, the white walls of a well will minimize variation across technical replicates by preventing transmission of fluorescence signals to the thermal cycler interface where it can be absorbed or inconsistently reflected.

FIG. 6 shows in its left part schematically the differences between using clear well walls (left part, left well) and white well walls (left part, right well). The signal refraction (indicated by arrows) is minimized when the wells are made of a white material so that there is no absorption of fluorescence by the thermal block but an improved reflection towards the upper opening for signal detection. With wells made of a clear material there will occur signal refraction because the light may be reflected by the inner surface of the thermo block instead of the inner surface of the well.

The right part of FIG. 6 shows in comparison the signal detection of identical fluorescein dilutions in water, wherein the upper row shows the results obtained using wells made of a clear and translucent plastic and the lower row shows the results using wells made of white plastic in qPCRs. Obviously, using a white material for the consumable's wells results in an improved light signal detection.

FIG. 7 shows an embodiment of the cover with sealing element 8 which has a centrally arranged surface 7 which comprises at least one plug 60 in terms of a downwards projecting protrusion which form-fits into the respective opening of a cavity 6 from a plate 5 as can be taken from the right part of FIG. 7. The left part of FIG. 7 indicates the location of plug 60 in the centrally arranged surface 7. It is also within the scope of the present disclosure that plug 60 is made of a material suitable to melt under heat with the upper part of the opening or a collar, if present.

FIG. 8 shows in its left part a stack 15 of two plates 5 with cavities 6. The right part of FIG. 8 shows a sectional view through the stack 15 of two plates 5. The plates 5 comprise downwards projecting snap-fit mechanisms 10 so that such a snap fit mechanism of the upper plate engages in a retaining rim 25 of a lower plate for connecting both plates 5.

The advantages of the present invention can be summarized as follows:
- allowing a needs-based consumption and processing of consumables and wells with a minimized plastic waste;
- compact and stackable consumable design for improved storage and usability;
- low space consumption (at shipping, storage, inside instrument etc.) due to dense packaging of components;
- symmetric design for decreased handling and orientation effort;
- minimizing contamination risk by a design allowing to provide the consumable and the cover in stacks;
- a compact and symmetric cycler block and thermal interface design:
   ∘ Equal thermal conditions for each well;
   ∘ Improved homogeneity and well-to-well-consistency;
   ∘ Lower energy consumption (low thermal masses);
- air-tight sealing of plate wells via heat sealing or welding
- design supports and improves fluorescence measurement.

Alternative approaches to realize or to circumvent the invention may relate to:
- Sealing of the plate via foil or thin plate;
- Sealing of plate via blister (thermoformed part);
- Well plate with integrated sealing (e.g. sealing caps on flexible arms);
- Well plate made of transparent material to also allow measurement from below;
- Well plate made of black material for influencing the optical performance;
- Mixed stacks (plate and sealing) compared to single-origin;
- Different number of cavities (e.g. 3x3, 4x2 or 4x4);
- Consumable parts without retaining and snap features;
- Consumables stored on common tray or carrier (mixed or single-origin);
- Welding features replaced by other well sealing elements:
   ∘ Flexible sealing elements (e.g. similar to O-ring), element is an integrated part or separate component, sealing effect is achieved by compressing the sealing element, compression force applied by external / peripheral devices (e.g. movable cycler lid);
   ∘ Matching conical interfaces at plate and cap;
   ∘ Individual plug / stopper sealing elements at cap;
- Thermal conductive material for consumable components to support cycling;
- Two-part sealing cap consisting of frame and foil.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: consumable
- 5: plate
- 6: cavity
- 8: cover with sealing element
- 7: centrally arranged surface
- 10: snap-fit mechanism
- 15: stack of plates
- 16: opening
- 18: stack of cover with sealing elements
- 25: retaining rim of plate
- 28: retaining rim of sealing element
- 30: collar
- 50: thermal treatment unit
- 55: liquid
- 60: plug

## Claims

1. A system for fluid handling and transport, comprising
- a plate with at least one cavity for receiving a fluid which is surrounded by a rim, and
- a separate cover comprising a centrally arranged surface as a sealing element which is surrounded by a rim,
wherein the plate or the cover comprise at least one snap-fit mechanism for connecting at least two plates, at least two covers or a plate and a cover, wherein the snap-fit mechanism extends upwards or downwards from the surrounding rim of the plate or the cover, and wherein the rim of the plate or cover which is to be connected is configured for accommodating the snap-fit mechanism of an upper or lower plate or cover in a retaining element arranged at the rim.

2. The system of claim 1, wherein the centrally arranged surface is surrounded by a frame holding a sealing foil.

3. The system of claim 1 or 2, wherein the sealing foil is configured to be permanently connected to the upper ends of the cavities' openings by heat sealing, or wherein the sealing foil is configured to be permanently connected to the upper ends of the cavities' openings by an adhesive.

4. The system of claim 1, wherein the centrally arranged surface is a rigid plate configured to be permanently pressed onto the upper ends of the cavities' openings by the engagement of the at least one snap-fit mechanism in the retaining element.

5. The system of any one of claims 1 to 4, wherein the centrally arranged surface is made of a translucent material and/or comprises a translucent window configured to allow light transmission.

6. The system of any one of claims 1 to 5, wherein the centrally arranged surface comprises at least one downwards projecting protrusion which accommodates form-fit into the opening of a cavity.

7. The system of any one of claims 1 to 6, wherein the walls of the cavities are made of
- a white material for increasing light reflection inside the cavity and preventing light refraction out of the cavity; or
- a black material for reducing background light reflection.

8. The system of any one of claims 1 to 7, wherein upper ends of the cavities are surrounded by a collar extending over the surface surrounding the openings of the plate.

9. The system of claim 8, wherein the collar is made of a material configured to melt with the centrally arranged surface of the cover during heat sealing.

10. The system of claim 9, wherein the collar is a sealing ring.

11. The system of any one of claims 1 to 10, wherein the plate comprises four cavities arranged two by two.

12. The system of any one of claims 1 to 11, wherein the plate and its surrounding rim have a quadratic shape.

13. The system of any one of claims 1 to 12, wherein the at least one snap-fit mechanism is a hook extending upwards or downwards from the rim of the cover or the plate.

14. The system of any one of claims 1 to 13, comprising a plate and a cover with sealing element with four snap-fit mechanisms on two opposing sides.

15. The use of a system of any one of claims 1 to 14 in PCR applications.
